(19) Europäisches Patentamt
European Patent Office
Office européen des brevets

(11) **EP 3 748 454 B1**

(12) **EUROPÄISCHE PATENTSCHRIFT**

(45) Veröffentlichungstag und Bekanntmachung des Hinweises auf die Patenterteilung:
**10.08.2022   Patentblatt 2022/32**

(21) Anmeldenummer: **20178103.6**

(22) Anmeldetag: **03.06.2020**

(51) Internationale Patentklassifikation (IPC):
***B60W 40/02*** *(2006.01)*     ***B60W 60/00*** *(2020.01)*
***G05D 1/00*** *(2006.01)*

(52) Gemeinsame Patentklassifikation (CPC):
**G05D 1/0088; B60W 40/02; B60W 60/0015;**
G05D 2201/0213

(54) **VERFAHREN UND VORRICHTUNG ZUM AUTOMATISCHEN AUSFÜHREN EINER STEUERFUNKTION EINES FAHRZEUGS**

METHOD AND DEVICE FOR AUTOMATICALLY EXECUTING A CONTROL FUNCTION OF A VEHICLE

PROCÉDÉ ET DISPOSITIF DE RÉALISATION AUTOMATIQUE D'UNE FONCTION DE COMMANDE D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.06.2019   DE 102019208234**

(43) Veröffentlichungstag der Anmeldung:
**09.12.2020   Patentblatt 2020/50**

(73) Patentinhaber: **VOLKSWAGEN AG
38440 Wolfsburg (DE)**

(72) Erfinder:
• **Schlicht, Peter
  38442 Wolfsburg (DE)**
• **Hüger, Fabian
  38302 Wolfenbüttel (DE)**

(56) Entgegenhaltungen:
**DE-A1-102016 009 655     DE-A1-102018 121 595
DE-A1-102018 129 048**

EP 3 748 454 B1

**Beschreibung**

Die Erfindung betrifft allgemein das autonome Fahren, und insbesondere ein Verfahren und eine Vorrichtung zum automatischen Ausführen einer Steuerfunktion eines Fahrzeugs, wobei zur Verarbeitung von Sensordaten ein künstliches neuronales Netzwerk eingesetzt wird.

Wenn ein Fahrzeug selbständig eine zielgerichtete Bewegung, insbesondere innerhalb des normalen Straßenverkehrs, ausführt, wird dies als autonomes Fahren, oder auch als automatisches oder automatisiertes Fahren bezeichnet, wobei die Bewegung ohne Eingriff eines Fahrers erfolgt. Sind noch Eingriffe eines Fahrers vorgesehen, beispielsweise das Steuern einzelner Funktionen wie Lenken oder Bremsen, so wird dies in der Regel als teilautonomes Fahren bezeichnet.

Zur Abgrenzung wird das autonome Fahren auch in bestimmte Stufen oder Level klassifiziert, wobei der Standard SAE J3016 beispielsweise Autonomiestufen des autonomen Fahrens von Stufe 0 (Keine Automation) bis zu Stufe 5 (Vollautomatisierung) definiert.

Die automatische Steuerung eines Fahrzeugs bzw. einzelner Steuerfunktionen eines Fahrzeugs erfolgt in Abhängigkeit von Informationen, die durch Sensoren gewonnen werden, wobei die Sensoren insbesondere am oder im Fahrzeug angeordnet sind. Als Sensoren können beispielsweise Kameras, Radarsensoren, Ultraschallsensoren oder auch Laserscanner (Lidar) zum Einsatz kommen. Ferner können beispielsweise Sensoren zur Ortsbestimmung, wie zum Beispiel ein GPS-Empfänger, Sensoren zur Raddrehzahl-Bestimmung oder Beschleunigungssensoren vorgesehen sein.

In der Regel wird mit Hilfe der Sensoren das Fahrzeugumfeld überwacht, um beispielsweise die aktuelle Verkehrssituation oder Umgebungsbedingungen zu ermitteln, wobei dabei häufig Klassifizierungsaufgaben durchgeführt werden müssen, d.h. es muss eine Zuordnung ermittelter Sensordaten zu einer von einer Mehrzahl vorgegebener Klassen vorgenommen werden.

Eine Klassifizierung von Sensordaten erfolgt beispielsweise bei der Objekterkennung, dem Tracking von Objekten, sowie bei der semantischen Segmentierung oder bei der Freiraum-oder Spurerkennung.

Für Klassifizierungsaufgaben werden heute häufig künstliche neuronale Netzwerke eingesetzt. Künstliche neuronale Netzwerke, oder kurz künstliche neuronale Netze (KNN), basieren meist auf der Vernetzung vieler künstlicher Neuronen, wobei die Topologie eines künstlichen neuronalen Netzwerkes je nach Aufgabe unterschiedlich gewählt werden kann.

Ein künstliches neuronales Netzwerk durchläuft in der Regel eine sogenannte Trainingsphase, in welcher das KNN insbesondere durch Modifikation von Gewichten der künstlichen Neuronen mit Hilfe vorgegebener Trainingsdaten angepasst wird. Dadurch sind KNNs in der Lage, komplizierte nichtlineare Funktionen über einen "Lern"-Algorithmus, der durch iterative oder rekursive Vorgehensweise aus vorhandenen Ein- und gewünschten Ausgangswerten alle Parameter der Funktion zu bestimmen versucht, zu erlernen.

Künstliche neuronale Netzwerke stellen somit statistische Modelle dar, die durch ein sogenanntes Training parametriert werden und im Bereich des automatischen Fahrens zu einem gegebenen Input in Form eines Sensoreindrucks eine Wahrscheinlichkeitsverteilung, auch als "Posterior" bezeichnet, für die Wahrnehmungsaufgabe ermitteln, wobei die Wahrscheinlichkeitsverteilung für jede Klasse eine Wahrscheinlichkeit dafür angibt, dass der Input der jeweiligen Klasse zuzuordnen ist.

In künstlichen neuronalen Netzen bezeichnet die Topologie die Struktur des Netzes, d.h. wie viele künstliche Neuronen sich auf wie vielen Schichten befinden, und wie diese miteinander verbunden sind. Künstliche Neuronen können auf vielfältige Weise zu einem künstlichen neuronalen Netz verbunden werden. Bei vielen Modellen werden Neuronen in hintereinanderliegenden Schichten angeordnet.

Die hinterste Schicht des Netzes, deren Neuronenausgaben meist als einzige außerhalb des Netzes sichtbar sind, wird als Ausgabeschicht bezeichnet. Davorliegende Schichten, mit Ausnahme der Eingabeschicht, werden entsprechend als verdeckte Schichten bezeichnet. Im automatischen Fahren werden insbesondere für die Wahrnehmung häufig tiefe neuronale Netze für Klassifizierungsaufgaben eingesetzt, wobei tief in diesem Zusammenhang bedeutet, dass das KNN eine Vielzahl verdeckter Schichten umfasst.

Nach dem Training werden die künstlichen neuronalen Netzwerke als Modell inferiert, d.h. als feste Funktion auf die Daten angewendet.

Klassisch wird hierbei der Posterior mit der Argmax-Funktion interpretiert, was bedeutet, dass diejenige Klasse, deren Posterior maximal ist, als Klassifizierungsergebnis interpretiert und als Modellausgabe weiterverarbeitet wird. Diese Interpretation wird auch als Bayes'sche Entscheidungsregel bezeichnet.

Diese Entscheidungsregel ist optimal für die Annahme, dass jeder Klassifizierungsfehler gleich schwer wiegt. Allerdings ist aus Sicht der funktionalen Sicherheit eine solche Annahme in der Regel nicht zutreffend. Beispielsweise ist es deutlich weniger fatal, einen Baum für ein Gebäude zu halten, als einen Fußgänger mit der Straße zu verwechseln.

Um solche sicherheitsgerichteten Aspekte zu berücksichtigen, ist es möglich, ein kostensensitives Training eines künstlichen neuronalen Netzwerks durchzuführen, indem beispielsweise während des Trainings bestimmte Wahrnehmungsfehler stärker bestraft werden.

Allerdings ist bei einem solchen kostensensitiven Training die Konvergenz, d.h. der Erfolg, des Trainings schwer sicherzustellen. Auch ist ein späteres Anpassen, beispielsweise aufgrund sich ändernder gesetzlicher Rahmenbedingungen, nicht möglich, ohne das Modell aufwändig komplett neu zu trainieren.

Es ist ferner bekannt, eine Unsicherheitsbewertung durchzuführen, beispielsweise durch ein sogenanntes Monte Carlo Dropout, die Berechnung der Entropie des Posteriors oder Interpretation des Posteriorwertes der Klassifizierungsklasse als Konfidenz. Dabei wird während der Inferenz ein Konfidenzwert ermittelt, welcher als Indikator für eine falsche Klassifizierung dient.

Die meisten Methoden der Unsicherheitsbewertung sind jedoch sehr rechenintensiv, was gerade in der Anwendung in automobilen Steuergeräten einen erheblichen Nachteil darstellt, da diese in der Regel nur über eine begrenzte Rechenkapazität verfügen.

Zudem liefert eine Unsicherheitsbewertung nur eine Indikation für eine inkorrekte Klassifizierung, aber keinen Aufschluss über die wahrscheinlich korrekte Klasse.

Bekannt ist ferner, zur Erhöhung der Sicherheit einer korrekten Klassifizierung ein Ensemble künstlicher neuronaler Netzwerke einzusetzen. Dabei wird eine Vielzahl von künstlichen neuronalen Netzwerken, die verschiedenen Trainings ausgesetzt wurden, gleichzeitig und parallel inferiert und eine konsolidierte Antwort generiert, wobei dabei spezifische Netze zum fokussierten Erkennen bestimmter Klassen zum Einsatz kommen können.

Nachteilig hieran ist jedoch, dass das parallele Inferieren mehrerer künstlicher neuronaler Netzwerke in Hinsicht auf Rechenlast, Energie- und Hardwarebedarf bei praktischen Anwendungen, insbesondere im automobilen Umfeld, nicht realistisch ist. Weiterhin sind gemeinsame Störungen von Ensembles bekanntermaßen möglich.

Ferner ist bekannt, unterschiedliche künstliche neuronale Netzwerke für verschiedene Kontexte einzusetzen, wobei das Umschalten zwischen Modellen zwangsläufig mit einem nicht vernachlässigbaren Rechenaufwand einhergeht. Außerdem muss bei der Entwicklung solcher Modelle in der Regel eine Restriktion des Trainingsdatensatzes auf die entsprechende kontextuelle Subdomäne vorgenommen werden. Dies sorgt für einen stark erhöhten Bedarf an Trainingsdaten, um eine hinreichende funktionale Qualität der einzelnen Modelle sicherzustellen.

Aus der nächstliegenden DE 10 2016 009 655 A1 ist ein Verfahren zum Betrieb eines Fahrzeugs bekannt, wobei das Fahrzeug in einem teilautonomen oder autonomen Fahrbetrieb anhand von Entscheidungen einer künstlichen neuronalen Netzwerkstruktur gesteuert wird, und wobei die Entscheidungen von einem statischen ersten neuronalen Netzwerk und einem lernfähigen zweiten neuronalen Netzwerk vorgeschlagen werden, wobei die von dem zweiten neuronalen Netzwerk vorgeschlagene Entscheidung zur Steuerung des Fahrzeugs verwendet wird, wenn die von den beiden neuronalen Netzwerken vorgeschlagenen Entscheidungen voneinander abweichen und eine Ausführung der von dem zweiten neuronalen Netzwerk vorgeschlagenen Entscheidung vorgegebene Sicherheits- und/oder Ethikkriterien in höherem Grade erfüllt, d.h. die von dem zweiten neuronalen Netzwerk vorgeschlagene Entscheidung dominant ist.

In DE 10 2018 129048 A1 wird ein Verfahren zum Durchführen einer autonomen Fahrzeugbetriebsanalyse beschrieben, bei welchem ein künstliches neuronales Netzwerk eingesetzt wird, um Korrelationsoperationen zwischen Übernahmedaten und menschlichen Ereignisdaten durchzuführen, wobei die Übernahmedaten Ereignisse betreffen, in denen ein menschlicher Fahrer die Kontrolle über ein autonomes Fahrzeug übernimmt, beispielsweise wenn ein menschlicher Fahrer sich gezwungen sieht, die Bremse zu betätigen.

Ferner wird in DE 10 2018 121595 A1 ein Verfahren zum unbeaufsichtigten Anlernen eines Fahragenten für autonome Fahranwendungen beschrieben, bei welchem unter Verwendung eines neuronalen Netzes Informationen aus Demonstrationen des Fahrverhaltens eines Experten extrahiert und an ein Generatormodul übertragen werden.

Der Erfindung liegt die Aufgabe zugrunde, einen Weg aufzuzeigen, wie das autonome oder teilautonome Steuern eines Fahrzeugs verbessert und/oder vereinfacht werden kann und wie insbesondere unterschiedliche Umgebungssituationen berücksichtigt und die Sicherheit beim autonomen oder teilautonomen Fahren verbessert werden kann.

Diese Aufgabe wird durch die Merkmale der unabhängigen Ansprüche gelöst. Vorteilhafte Ausführungsformen sind Gegenstand der abhängigen Ansprüche, wobei die angegebenen Merkmale und Vorteile im Wesentlichen für alle unabhängigen Ansprüche gelten können.

Ein Kerngedanke der Erfindung besteht darin, bei einer Klassifizierung von Sensordaten, d.h. beim Zuordnen ermittelter Sensordaten zu einer von einer Mehrzahl vorbestimmter Klassen, welche mit Hilfe eines künstlichen neuronalen Netzwerks erfolgt, eine Umgebungssituation bzw. einen Kontext zu berücksichtigen, und dementsprechend die Klassenzuordnung nicht nur in Abhängigkeit der Ausgabe des künstlichen neuronalen Netzwerks, sondern auch in Abhängigkeit eines durch wenigstens eine Umgebungsvariable definierten Kontextes durchzuführen.

Ein weiterer Kerngedanke der Erfindung besteht darin, die beim autonomen und teilautonomen Fahren wesentlichen Sicherheitsaspekte im Zusammenhang mit auftretenden Klassifizierungsaufgaben dadurch zu berücksichtigen, dass auf die Ausgabe eines künstlichen neuronalen Netzwerks eine Kostenfunktion angewandt wird, in welcher die Sicherheitskosten berücksichtigt werden, die mit einer falschen Klassenzuordnung verbunden sind, wobei die Erfindung zu diesem Zweck insbesondere den Einsatz einer Kostenmatrix und eine zur Kostenmatrix optimale Entscheidungsregel vorsieht.

Dementsprechend umfasst ein Verfahren zum automatischen Ausführen einer Steuerfunktion eines autonom oder teilautonom gesteuerten Fahrzeugs das Ermitteln von Sensordaten mittels wenigstens eines Sensors eines Fahrzeugs, sowie das Verarbeiten der Sensordaten mittels eines künstlichen neuronalen Netzwerkes, wobei dem künstlichen neuronalen Netzwerk die Sensordaten oder aus den Sensordaten abgeleitete Daten als Eingangsgrößen zugeführt werden und das künstliche neuronale Netzwerk die Eingangsgrößen in Abhängigkeit einer parametrierbaren Verarbeitungskette auf Ausgangsgrößen abbildet. Ferner sieht das Verfahren das Ermitteln wenigstens eines Wertes wenigstens einer Umgebungsvariablen vor.

Die ermittelten Sensordaten werden klassifiziert, wobei die Klassifizierung in Abhängigkeit der von dem künstlichen neuronalen Netzwerk ermittelten Ausgangsgrößen und in Abhängigkeit des wenigstens einen ermittelten Wertes der wenigstens einen Umgebungsvariablen erfolgt. In Abhängigkeit der Klassifizierung wird dann die Steuerfunktion ausgeführt.

Das Ermitteln des wenigstens einen Wertes der wenigstens einen Umgebungsvariablen kann vorteilhaft mittels wenigstens eines Sensors des Fahrzeugs erfolgen, wobei hierfür der gleiche oder ein anderer Sensor als derjenige Sensor eingesetzt werden kann, mit welchem die zu klassifizierenden Sensordaten ermittelt werden.

Die Klassifizierung erfolgt somit in Abhängigkeit zweier separater unabhängiger Eingangsgrößen, und zwar einerseits der von dem künstlichen neuronalen Netzwerk ermittelten Ausgangsgrößen und andererseits des wenigstens einen ermittelten Wertes der wenigstens einen Umgebungsvariablen. Auch wenn gegebenenfalls ganz oder teilweise die gleichen Sensordaten oder aus diesen abgeleitete Daten dem künstlichen neuronalen Netzwerk zugeführt werden und zum Ermitteln des wenigstens einen Wertes der wenigstens einen Umgebungsvariablen verwendet werden, erfolgt die Klassifizierung in Abhängigkeit der von dem künstlichen neuronalen Netzwerk ermittelten Ausgangsgrößen und zusätzlich unmittelbar in Abhängigkeit des wenigstens einen ermittelten Wertes der wenigstens einen Umgebungsvariablen.

Besonders vorteilhaft wird die Klassifizierung durch ein Klassifizierungsmodul einer Auswerteeinheit ausgeführt, wobei das Klassifizierungsmodul dazu ausgebildet ist, von dem wenigstens einen Sensor ermittelte Sensordaten mittels eines künstlichen neuronalen Netzwerkes zu verarbeiten, sowie die ermittelten Sensordaten in Abhängigkeit der von dem künstlichen neuronalen Netzwerk ermittelten Ausgangsgrößen und zusätzlich in Abhängigkeit wenigstens eines ermittelten Wertes wenigstens einer Umgebungsvariablen zu klassifizieren, wobei der wenigstens eine ermittelte Wert der wenigstens einen Umgebungsvariablen von einem separaten, mit der Auswerteeinheit verbundenen Überwachungsmodul ermittelt und der Auswerteeinheit zugeführt wird.

Beim autonomen oder teilautonomen Fahren sind der Steuerphase, d.h. dem Ausführen der Steuerfunktion, typischerweise eine Wahrnehmungs- und eine Planungsphase vorgeschaltet. Die Wahrnehmungs-, Planungs- und Steuerphasen werden auch als "Sense", "Plan" und "Act" bezeichnet.

Das oben beschriebene Klassifizieren der ermittelten Sensordaten in Abhängigkeit der von dem künstlichen neuronalen Netzwerk ermittelten Ausgangsgrößen und in Abhängigkeit des wenigstens einen ermittelten Wertes der wenigstens einen Umgebungsvariablen erfolgt insbesondere ausschließlich innerhalb der Wahrnehmungsphase der autonomen oder teilautonomen Steuerung eines Fahrzeugs.

Nach dem Klassifizieren können daher vorteilhaft Schritte zur Planung einer auszuführenden Steuerfunktion vorgesehen sein, wobei die Planungsschritte in Abhängigkeit des Wahrnehmungsergebnisses erfolgen und dem Auswählen einer auszuführenden Steuerfunktion dienen, wobei in die Planung weitere Parameter einfließen können. Die Planungsphase einer autonomen oder teilautonomen Steuerung eines Fahrzeugs ist an sich bekannt und bildet keinen wesentlichen Bestandteil des vorliegend beschriebenen Verfahrens. Auf eine detaillierte Beschreibung der Planungsphase kann daher im Folgenden verzichtet werden.

Ferner ist anzumerken, dass das Verfahren und insbesondere das verfahrensgemäß vorgesehene Klassifizieren vorzugsweise im Betrieb eines autonom oder teilautonom gesteuerten Fahrzeugs, d.h. im Regelbetrieb bei der normalen Nutzung des Fahrzeugs, und nicht zur Analyse menschlichen und/oder autonomen Fahrverhaltens eingesetzt wird.

Ein Kernaspekt der Erfindung besteht somit insbesondere darin, eine Klassifizierung ermittelter Sensordaten in der Wahrnehmungsphase einer autonomen oder teilautonomen Steuerung eines Fahrzeugs an die jeweiligen Umgebungsbedingungen anzupassen, wobei zusätzlich vorteilhaft eine sicherheitsfokussierte Anpassung der Klassifizierung vorgesehen sein kann.

Als Sensoren können beispielsweise Kameras, Radarsensoren, Ultraschallsensoren oder auch Laserscanner (Lidar) zum Einsatz kommen. Ferner können beispielsweise Sensoren zur Ortsbestimmung, wie zum Beispiel ein GPS-Empfänger, Sensoren zur Raddrehzahl-Bestimmung oder Beschleunigungssensoren verwendet werden. Es können aber auch außerhalb des Fahrzeugs angeordnete Sensoren mit einbezogen werden, deren Sensordaten beispielsweise mittels drahtloser Kommunikation zum Fahrzeug übertragen werden.

Das Ermitteln des wenigstens einen Wertes der wenigstens einen Umgebungsvariablen kann daher ferner vorteilhaft ein Auslesen des Wertes aus einem im Fahrzeug angeordneten Speicher oder ein Empfangen des Wertes über eine Kommunikationsschnittstelle des Fahrzeugs umfassen.

Als Umgebungsvariablen, die ermittelt werden können, kommen eine Vielzahl von Variablen in Betracht, wie zum Beispiel geographische Gegebenheiten, wie Umgebung, Stadt, Straßentyp, Land, Landschaft, Nähe zu bestimmten Points of Interest wie Schulen, Stadien, Parks etc., Witterungsbedingungen, wie Niederschlag, Temperatur, Wind, Bewölkungsgrad, Jahreszeit, Helligkeit etc., oder Verkehrsbedingungen, wie Straßenglätte, Verkehrsaufkommen oder Tageszeit.

Vorteilhaft ist ein Überwachungsmodul im Fahrzeug vorgesehen, mit dem der wenigstens eine Wert einer Umgebungsvariablen ermittelt wird.

Das Verfahren sieht ferner vor, dass in Abhängigkeit des wenigstens einen ermittelten Wertes der wenigstens einen Umgebungsvariablen eine Umgebungssituation aus einer Mehrzahl vorgegebener Umgebungssituationen bestimmt wird, wobei das Bestimmen der Umgebungssituation insbesondere mittels Vergleichen des wenigstens einen ermittelten Wertes mit hinterlegten Vergleichswerten erfolgt.

Beispielsweise kann anhand von Schwellwerten für mittels eines Regensensors ermittelten Niederschlagswerten als Umgebungssituation "trocken", "leichter Regen", oder "starker Regen" bestimmt werden.

Besonders vorteilhaft erfolgt das Klassifizieren der ermittelten Sensordaten in Abhängigkeit einer kostenbasierten Entscheidungsregel, umfassend das Ausführen einer Berechnung gemäß einer eine Kostenmatrix umfassenden Berechnungsvorschrift, wobei die Kostenmatrix für jede Kombination von zuordenbarer Klasse und Soll-Klasse einen Kostenfaktor umfasst, wobei der jeweilige Kostenfaktor die Kosten angibt, die sich ergeben, wenn statt der Soll-Klasse die jeweilige zuordenbare Klasse zugeordnet wird, und wobei die Kostenmatrix in Abhängigkeit der bestimmten Umgebungssituation aus einer Mehrzahl unterschiedlicher vorgegebener Kostenmatrizen ausgewählt wird.

Der Begriff der Soll-Klasse bezeichnet die tatsächliche Klasse, d.h. die Klasse, welche den ermittelten Sensordaten bei korrekter Klassifizierung zugeordnet werden sollte.

Dabei wird bevorzugt für jede der Mehrzahl vorgegebener Umgebungssituationen genau eine Kostenmatrix vorgegeben, wobei das Auswählen der Kostenmatrix in Abhängigkeit einer eindeutigen Zuordnung von Umgebungssituation zu Kostenmatrix erfolgt, und wobei die eindeutige Zuordnung insbesondere in einer Tabelle oder in einer indizierten Liste in einem Speicher des Fahrzeugs hinterlegt ist.

Zum Ausführen des Verfahrens ist vorteilhaft eine Auswerteeinheit im Fahrzeug vorgesehen, welche die Schritte des Verarbeitens der Sensordaten und des Klassifizierens ausführt und das Ergebnis der Klassifizierung an einem Ausgang bereitstellt. Vorteilhaft ist eine mit der Auswerteeinheit verbundene Steuereinheit vorgesehen, die zum Ausführen der Steuerfunktion entsprechende Aktoren des Fahrzeugs steuert, wobei die Steuereinheit zu diesem Zweck von der Auswerteeinheit das bereitgestellte Ergebnis der Klassifizierung empfängt. Auswerteeinheit und Steuereinheit bilden zusammen mit dem Überwachungsmodul Bestandteile eines Steuersystems des Fahrzeugs, wobei Überwachungsmodul, Auswerteeinheit und Steuereinheit als separate Baugruppen oder auch teilweise oder vollständig als eine gemeinsamen Baugruppe ausgebildet sein können.

In einem einfachen Ausführungsbeispiel des Verfahrens umfasst das Klassifizieren das Zuordnen ermittelter Sensordaten zu einer von einer Mehrzahl von vorgegebenen Klassen. Die Mehrzahl von vorgegebenen Klassen kann je nach Einsatzzweck eine unterschiedliche Anzahl an Klassen umfassen, vorteilhaft umfasst die Mehrzahl von vorgegebenen Klassen wenigstens drei Klassen, es kann aber auch eine Vielzahl von vorgegebenen Klassen vorgesehen sein. Das Zuordnen ermittelter Sensordaten zu einer der vorgegebenen Klassen erfolgt in Abhängigkeit der von dem künstlichen neuronalen Netzwerk ermittelten Ausgangsgrößen und zusätzlich in Abhängigkeit des wenigstens einen ermittelten Wertes der wenigstens einen Umgebungsvariablen. Das Zuordnen ermittelter Sensordaten zu einer der vorgegebenen Klassen kann ferner vorteilhaft in Abhängigkeit einer vorgegebenen sicherheitsgerichteten Entscheidungsregel erfolgen, wobei die sicherheitsgerichtete Entscheidungsregel der oben beschriebenen kostenbasierten Entscheidungsregel entsprechen kann. Das Klassifizieren kann vorteilhaft auch das Durchführen einer Vielzahl von Klassenzuordnungen umfassen. Beispielsweise kann jedem Bildpunkt eines mittels einer Kamera erfassten digitalen Bildes eine Klasse aus einer Mehrzahl vorgegebener Klassen zugeordnet werden. Eine solche dichte Klassifizierung wird beispielsweise bei Durchführen einer semantischen Segmentierung oder einer Freiraumerkennung eingesetzt.

Die parametrierbare Verarbeitungskette umfasst insbesondere eine Vielzahl künstlicher Neuronen, die in mehreren Schichten angeordnet das künstliche neuronale Netzwerk bilden. Das künstliche neuronale Netzwerk umfasst zumindest eine Eingabeschicht und eine Ausgabeschicht, sowie vorteilhaft zwischen Eingabe- und Ausgabeschicht angeordnete verdeckte Schichten. Besonders vorteilhaft ist das künstliche neuronale Netzwerk als tiefes neuronales Netzwerk ausgebildet, dessen parametrierbare Verarbeitungskette eine Mehrzahl verdeckter Verarbeitungsschichten umfasst, wobei die Anzahl verdeckter Schichten je nach Einsatzzweck vorteilhaft über 10, über 20 oder sogar über 50 oder 100 liegen kann.

Die Sensordaten oder die aus den Sensordaten abgeleiteten Daten, die klassifiziert werden sollen, werden der Eingabeschicht des künstlichen neuronalen Netzwerks vorteilhaft in Form wenigstens eines Merkmalsvektors zugeführt, welcher eine vorgegebene Anzahl von Datenwerten umfasst, wobei jeweils einer der Datenwerte einem zugeordneten künstlichen Neuron der Eingabeschicht zugeführt wird. Bei Durchführen einer Freiraumerkennung oder einer semantischen Segmentierung umfassen die ermittelten Sensordaten insbesondere ein digitales Bild, welches der Eingabeschicht des neuronalen Netzwerks zugeführt wird, wobei für jeden Bildpunkt beispielsweise ein Farbwert in Form eines Merkmalsvektors bereitgestellt werden kann, wobei dieser beispielsweise die Form eines dreidimensionalen Vektors im RGB-Farbraum hat.

Die Ausgabeschicht des künstlichen neuronalen Netzwerks umfasst in einer einfachen Ausgestaltung eine mit der Anzahl N der vorgegebenen Klassen übereinstimmende Anzahl an künstlichen Neuronen. Die Ausgabe des künstlichen neuronalen Netzwerks erfolgt somit vorteilhaft in Form eines N-dimensionalen Ausgabevektors, dessen N Komponenten durch die N Neuronen der Ausgabeschicht des künstlichen neuronalen Netzwerks bereitgestellt werden. Der N-dimensionale Ausgabevektor entspricht dabei vorteilhaft dem Ergebnis einer Softmax-Funktion, d.h. die Komponenten des Ausgabevektors summieren sich zu 1 und liegen jeweils zwischen 0 und 1, so dass der N-dimensionale Ausgabevektor als Wahrscheinlichkeitsverteilung bezüglich einer Zuordnung zu den N Klassen interpretiert werden kann.

Bei einer dichten Klassifizierung wie zum Beispiel bei Durchführen einer Freiraumerkennung oder einer semantischen Segmentierung erfolgt die Ausgabe des künstlichen neuronalen Netzwerks vorteilhaft in Form einer $m \times n$ Matrix von N-dimensionalen Ausgabevektoren, wobei die Ausgabeschicht eine entsprechende Anzahl an künstlichen Neuronen umfasst.

Die semantische Segmentierung eines digitalen Bildes dient dazu, das Bild in Bereiche zu unterteilen, denen jeweils eine semantische Bedeutung zukommt, beispielsweise, ob es sich bei dem jeweiligen Bildbereich um Straße, um ein Fahrzeug oder um einen Fußgänger handelt. Das Ergebnis einer semantischen Segmentierung kann vorteilhaft in nachfolgenden Auswertungsschritten weiterverarbeitet werden, beispielsweise als Grundlage für eine Objekt- oder Freiraumerkennung oder für eine Situationsanalyse.

Für eine semantische Segmentierung besteht die Eingabe, die der Eingabeschicht des künstlichen neuronalen Netzwerks zugeführt wird, insbesondere in einem von einer Kamera erfassten digitalen Bild mit einer vorgegebenen Bildauflösung von $a \times b$ Bildpunkten, wobei jeder Bildpunkt eine vorgegebene Farbauflösung aufweist. Die Ausgabeschicht des künstlichen neuronalen Netzwerks liefert vorzugsweise eine $m \times n$ Matrix von N-dimensionalen Ausgabevektoren, wobei jeder der N-dimensionalen Ausgabevektoren als Wahrscheinlichkeitsverteilung bezüglich einer Zuordnung zu den N Klassen interpretiert werden kann.

Die Ausgabematrix kann die gleiche Auflösung aufweisen wie das Eingabebild, so dass $a \times b = m \times n$ gilt. Es kann aber durch das neuronale Netzwerk auch eine Reduzierung der Auflösung erfolgen, so dass $a \times b > m \times n$ gilt.

Das künstliche neuronale Netzwerk wird vor dem Einsatz, d.h. bevor es zum Verarbeiten ermittelter Sensordaten eingesetzt wird, vorteilhaft unter Verwendung vorgegebener Trainingsdaten trainiert, wobei durch das Training die parametrierbare Verarbeitungskette parametriert wird, und wobei die sicherheitsgerichtete Entscheidungsregel und die vorgegebenen Kostenmatrizen durch das Training des künstlichen neuronalen Netzwerks nicht geändert werden.

In der Trainingsphase wird das künstliche neuronale Netzwerk insbesondere durch Modifikation von Gewichten der künstlichen Neuronen angepasst, wobei das Training vorteilhaft mittels überwachtem Lernen erfolgen kann.

Während des Trainings wird die Bayes'sche Entscheidungsregel verwendet, d.h. es wird jeweils diejenige Klasse als Zuordnungsergebnis ausgewählt, für welche das neuronale Netzwerk den höchsten Wahrscheinlichkeitswert liefert.

Im Verfahren werden der Trainingsdatensatz mit seiner Statistik sowie das trainierte neuronale Netz als gegebenes, fixes statistisches Modell aufgefasst.

Die Erfindung fügt vorteilhaft eine sicherheitsfokussierte Kostenfunktion hinzu, wobei die Kostenfunktion aus einer Mehrzahl vorgegebener Kostenfunktionen kontextspezifisch ausgewählt wird, d.h. abhängig von der aktuellen Situation des Fahrzeugs, z.B. dem Wetter, dem Ort, dem Land, der jeweiligen Gesetzgebung, den Lichtverhältnissen, dem Einsatz in der Stadt oder auf dem Land oder der Straßenform, indem wie oben ausgeführt, eine Umgebungssituation bestimmt wird, wobei zu diesem Zweck wenigstens ein Wert wenigstens einer Umgebungsvariablen ermittelt wird.

Die jeweils ausgewählte Kostenfunktion kann zusätzlich auch Trainingsdatensatzspezifisch sein, wobei a priori-Wahrscheinlichkeiten des Trainingsdatensatzes in Betracht gezogen werden, oder durch eine Standardisierungs- oder Homologationsinstitution vorgegeben sein.

Insbesondere umfasst die Kostenfunktion eine Kostenmatrix, in welcher die Kosten für die Interpretation einer tatsächlichen Klasse x gegen die inferierte Klasse y aufgetragen werden, so dass die Einträge der Matrix die Sicherheitskosten beschreiben.

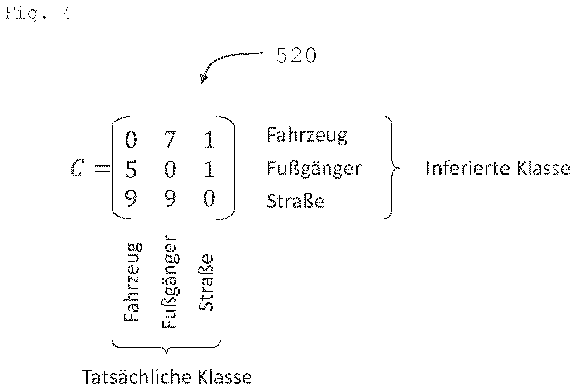

Dementsprechend umfasst das Klassifizieren das Ausführen einer Berechnung gemäß einer eine ausgewählte Kostenmatrix umfassenden Berechnungsvorschrift, wobei die ausgewählte Kostenmatrix für jede Kombination von zuordenbarer Klasse und Soll-Klasse einen Kostenfaktor umfasst, wobei der jeweilige Kostenfaktor die Kosten angibt, die sich ergeben, wenn statt der Soll-Klasse die jeweilige zuordenbare Klasse zugeordnet wird. Ein einfaches Beispiel einer solchen Matrix C ist in Fig. 4 dargestellt und mit dem Bezugszeichen 520 bezeichnet. Bei einer dichten Klassifizierung mit einer Mehrzahl von Ausgabevektoren wird die Berechnung vorzugsweise für jeden der Ausgabevektoren durchgeführt.

Die sicherheitsgerichtete Entscheidungsregel wird vorteilhaft als eine zur Kostenfunktion optimale Entscheidungsregel festgelegt, bei welcher eine Verrechnung des Posteriors des künstlichen neuronalen Netzwerks gegen die Stellgrößen der Kostenfunktion erfolgt.

Besonders vorteilhaft wird die sicherheitsgerichtete Entscheidungsregel dem künstlichen neuronalen Netzwerk modular nachgestellt und kann als letzte Schicht am künstlichen neuronalen Netzwerk angedockt werden. Mit anderen Worten ist die sicherheitsgerichtete Entscheidungsregel dem künstlichen neuronalen Netzwerk vorteilhaft als weitere Verarbeitungsschicht nachgeschaltet.

Mit besonderem Vorteil wird die Entscheidungsregel weder gelernt noch zum Training oder der Optimierung des künstlichen neuronalen Netzwerkes verwendet. Vielmehr ist die sicherheitsgerichtete Entscheidungsregel vorzugsweise fest vorgegeben und wird durch das Training des künstlichen neuronalen Netzwerks nicht geändert.

Besonders vorteilhaft handelt es sich bei der sicherheitsgerichteten Entscheidungsregel bzw. bei deren Ausführung zum Zweck der Klassenzuordnung um einen einzelnen zusätzlichen Berechnungsschritt, der in sehr kurzer Zeit umsetzbar ist, wobei der Berechnungsschritt insbesondere das Ausführen einer Matrizenmultiplikation für jeden N-dimensionalen Ausgabevektor des künstlichen neuronalen Netzwerks umfasst.

Die Ausgabe des künstlichen neuronalen Netzwerkes wird vorteilhaft gemäß der optimalen Entscheidungsregel interpretiert und das sich daraus ergebende Klassifizierungsergebnis im automatischen Fahrsystem weiterverarbeitet.

Ein Steuersystem zum automatischen Ausführen einer Steuerfunktion eines autonom oder teilautonom gesteuerten Fahrzeugs umfasst ein Überwachungsmodul zum Ermitteln wenigstens eines Wertes wenigstens einer Umgebungsvariablen, eine mit dem Überwachungsmodul verbundene Auswerteeinheit mit wenigstens einem Eingang zum Anschließen wenigstens eines Sensors des Fahrzeugs, wobei die Auswerteeinheit ein Klassifizierungsmodul umfasst, welches dazu ausgebildet ist, von dem wenigstens einen Sensor ermittelte Sensordaten mittels eines künstlichen neuronalen Netzwerkes zu verarbeiten, wobei dem künstlichen neuronalen Netzwerk die Sensordaten oder aus den Sensordaten abgeleitete Daten als Eingangsgrößen zugeführt werden und das künstliche neuronale Netzwerk die Eingangsgrößen in Abhängigkeit einer parametrierbaren Verarbeitungskette auf Ausgangsgrößen abbildet, und die ermittelten Sensordaten in Abhängigkeit der von dem künstlichen neuronalen Netzwerk ermittelten Ausgangsgrößen und in Abhängigkeit wenigstens eines mittels des Überwachungsmoduls ermittelten Wertes wenigstens einer Umgebungsvariablen zu klassifizieren. Das Steuersystem umfasst ferner eine Steuereinheit mit wenigstens einem Ausgang zum Anschließen wenigstens eines Aktors des Fahrzeugs, wobei die Steuereinheit dazu ausgebildet ist, die Steuerfunktion in Abhängigkeit eines von der Auswerteeinheit bereitgestellten Klassifizierungsergebnisses durch Ansteuern des wenigstens einen Aktors auszuführen.

Zum Ermitteln des wenigstens einen Wertes der wenigstens einer Umgebungsvariablen umfasst das Überwachungsmodul bevorzugt wenigstens einen Eingang zum Einlesen von Sensordaten, einen Speicher und/oder eine Kommunikationsschnittstelle.

Das Steuersystem ist insbesondere zum Ausführen des oben beschriebenen Verfahrens ausgebildet, wobei das Steuersystem ferner vorteilhaft dazu ausgebildet ist, die oben beschriebenen vorteilhaften Varianten des Verfahrens auszuführen, wobei die Komponenten des Steuersystems, d.h. das Überwachungsmodul, die Auswerteeinheit und/oder die Steuereinheit, zu diesem Zweck vorteilhaft entsprechend angepasst sind.

Im Rahmen der Erfindung liegt ferner ein zum autonom oder teilautonom gesteuerten Fahren ausgebildetes Fahrzeug, welches ein oben beschriebenes Steuersystem umfasst.

Diese und weitere Merkmale und Vorteile der vorliegenden Erfindung ergeben sich auch aus den Ausführungsbeispielen, welche nachfolgend unter Bezugnahme auf die beiliegenden Zeichnungen näher erläutert werden. Es zeigen dabei

Fig. 1    eine schematische Darstellung einer beispielhaften Ausführungsform eines erfindungsgemäßen Fahrzeugs, welches eine beispielhafte Ausführungsform einer erfindungsgemäßen Steuereinheit umfasst, die zum Ausführen einer beispielhaften Ausführungsform des erfindungsgemäßen Verfahrens ausgebildet ist,

Fig. 2    eine schematische Darstellung eines beispielhaften künstlichen neuronalen Netzwerks,

Fig. 3    eine schematische Darstellung eines beispielhaften künstlichen neuronalen Netzwerks, welchem eine zusätzliche Verarbeitungsschicht nachgeschaltet ist,

Fig. 4    ein einfaches Beispiel einer Kostenmatrix.

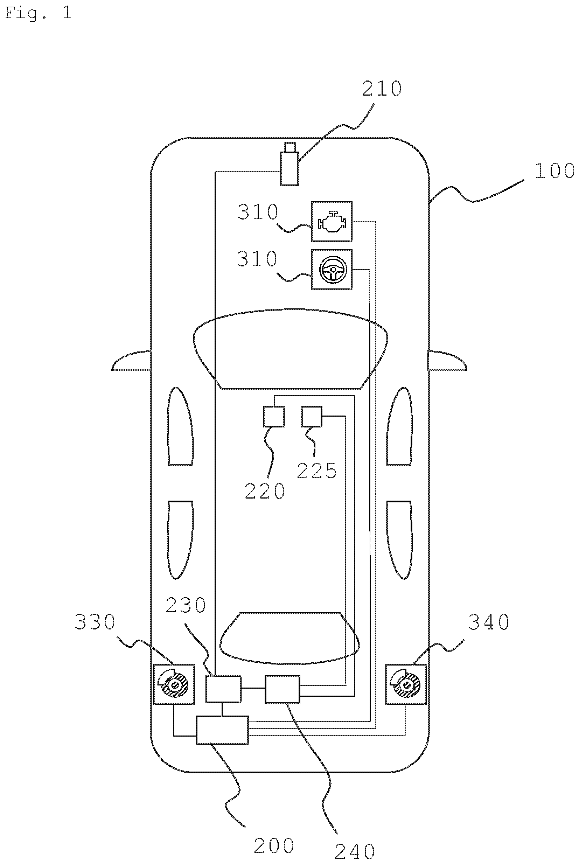

In Fig. 1 ist schematisch und beispielhaft ein Fahrzeug 100 dargestellt, welches dazu ausgebildet ist, dass wenigstens eine Steuerfunktion automatisch ausgeführt wird, um ein autonomes oder teilautonomes Fahren zu ermöglichen.

Zu diesem Zweck umfasst das Fahrzeug 100 ein Steuersystem, welches im dargestellten Ausführungsbeispiel ein Überwachungsmodul 240, eine mit dem Überwachungsmodul 240 verbundene Auswerteeinheit 230, sowie eine mit der Auswerteeinheit 230 verbundene Steuereinheit 200 zum automatischen Ausführen einer Steuerfunktion des Fahrzeugs 100 umfasst. Die Auswerteeinheit 230 umfasst wenigstens einen Eingang zum Anschließen wenigstens eines Sensors des Fahrzeugs. Im dargestellten Beispiel umfasst das Fahrzeug 100 eine Kamera 210 zum Erfassen von Bilddaten, wobei die Kamera 210 mit einem Eingang der Auswerteeinheit 230 verbunden ist. Ferner umfasst das Fahrzeug 100 im dargestellten Ausführungsbeispiel als weitere Sensoren einen Regensensor 220 sowie einen Lichtsensor 225, wobei die Sensoren 220 und 225 mit dem Überwachungsmodul 240 verbunden sind.

Die Steuereinheit 200 umfasst wenigstens einen Ausgang zum Anschließen wenigstens eines Aktors des Fahrzeugs 100, wobei im dargestellten Beispiel Aktoren 330 und 340 zum Durchführen eines Bremsvorgangs, ein Aktor 310 zur Motorsteuerung, sowie ein Aktor 320 zur Lenksteuerung vorgesehen sind, wobei die Aktoren 310, 320, 330 und 340 mit jeweiligen Ausgängen der Steuereinheit 200 verbunden sind.

Das Überwachungsmodul 240 überwacht die Fahrzeugumgebung hinsichtlich der Niederschlags- und Lichtintensität und wertet zu diesem Zweck Sensordaten des Regensensors 220 und des Lichtsensors 225 aus, um eine Umgebungssituation aus einer Mehrzahl vorgegebener Umgebungssituationen zu bestimmen, wobei diese beispielhaft die Kombinationen "trocken"/"hell", "trocken"/"dunkel", "leichter Regen"/"hell", "leichter Regen"/"dunkel", "starker Regen"/"hell" und "starker Regen"/"dunkel" umfassen können.

Selbstverständlich können eine Vielzahl anderer oder weiterer Umgebungssituationen vorgegeben werden, zu deren Bestimmung auch eine Mehrzahl von Umgebungsvariablen mit geeigneten Sensoren ermittelt werden können.

Die Auswerteeinheit 230 umfasst ein Klassifizierungsmodul, welches dazu ausgebildet ist, von dem Sensor 210 ermittelte Sensordaten mittels eines künstlichen neuronalen Netzwerkes zu verarbeiten, wobei dem künstlichen neuronalen Netzwerk die Sensordaten oder aus den Sensordaten abgeleitete Daten als Eingangsgrößen zugeführt werden und das künstliche neuronale Netzwerk die Eingangsgrößen in Abhängigkeit einer parametrierbaren Verarbeitungskette auf Ausgangsgrößen abbildet, und die ermittelten Sensordaten zu klassifizieren, wobei die Klassifizierung in Abhängigkeit der von dem künstlichen neuronalen Netzwerk ermittelten Ausgangsgrößen und in Abhängigkeit der mittels des Überwachungsmoduls 240 ermittelten Umgebungsvariablen, insbesondere in Abhängigkeit der daraus bestimmten Umgebungssituation, erfolgt. Die Auswerteeinheit 230 leitet das Klassifizierungsergebnis, vorzugsweise in Form eines digitalen Datensatzes, an die Steuereinheit 200 weiter.

Insbesondere wird durch das Überwachungsmodul 240 in Abhängigkeit der bestimmten Umgebungssituation eine zugeordnete Kostenmatrix aus einer in einem Speicher des Fahrzeugs 100 oder in einem Speicher des Überwachungsmoduls 240 gespeicherten Tabelle oder indizierten Liste ausgewählt.

Die Steuereinheit 200 ist dazu ausgebildet, das Klassifizierungsergebnis von der Auswerteeinheit 230 zu empfangen und die Steuerfunktion in Abhängigkeit des Klassifizierungsergebnisses durch Ansteuern wenigstens eines der Aktoren 310, 320, 330 und 340 auszuführen.

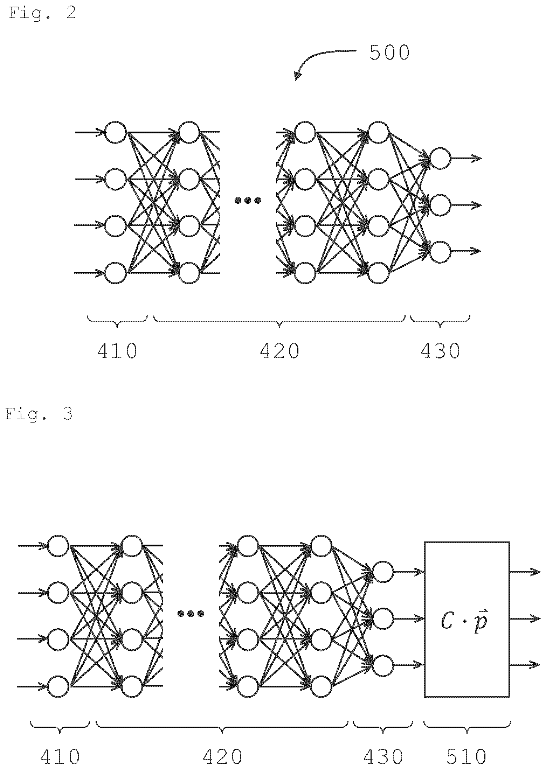

Ein Beispiel eines einsetzbaren künstlichen neuronalen Netzwerks 500 ist in Fig. 2 dargestellt, wobei in dem dargestellten Beispiel das künstliche neuronale Netzwerk 500 eine Vielzahl verknüpfter künstlicher Neuronen 401 umfasst, die in einer Eingabeschicht 410, einer Mehrzahl verdeckter Schichten 420 und einer Ausgabeschicht 430 angeordnet sind. Das Klassifizierungsmodul der Auswerteeinheit 230 verwendet vorteilhaft ein solches künstliches neuronales Netzwerk, wobei diesem im dargestellten Ausführungsbeispiel eine weitere Verarbeitungsschicht 510 nachgeschaltet ist, wie dies in Fig. 3 dargestellt ist.

Der Eingabeschicht 410 werden von der Kamera 210 bereitgestellte Sensordaten oder aus diesen Sensordaten abgeleitete Daten zugeführt, vorteilhaft in Form eines Merkmalsvektors, welcher eine vorgegebene Anzahl von Datenwerten umfasst, wobei jeweils einer der Datenwerte einem zugeordneten künstlichen Neuron der Eingabeschicht zugeführt wird.

Der einfacheren Darstellbarkeit umfasst die Eingabeschicht im dargestellten Ausführungsbeispiel nur vier Neuronen 401. Diese kann jedoch je nach Einsatzzweck auch eine deutlich höhere Anzahl an Neuronen umfassen. Der dem künstlichen neuronalen Netzwerk zugeführte Merkmalsvektor kann beispielsweise Farbwerte von Bildpixeln in Form von RGB-Werten umfassen. Besonders vorteilhaft wird eine dichte Klassifizierung eines von der Kamera 210 erfassten digitalen Bildes, beispielsweise zur semantischen Segmentierung, durchgeführt. Zu diesem Zweck wird der Eingabeschicht 410 vorteilhaft ein komplettes digitales Bild als Eingabe zugeführt, wobei die Eingabeschicht 410 dann eine entsprechende Vielzahl von Neuronen 401 umfasst.

Die Ausgabeschicht 430 des künstlichen neuronalen Netzwerks umfasst im dargestellten einfachen Fall eine mit einer Anzahl $N$ vorgegebener Klassen übereinstimmende Anzahl an künstlichen Neuronen. Die Ausgabe des künstlichen neuronalen Netzwerks erfolgt somit vorteilhaft in Form eines $N$-dimensionalen Ausgabevektors, dessen $N$ Komponenten durch die $N$ Neuronen der Ausgabeschicht des künstlichen neuronalen Netzwerks bereitgestellt werden. Der $N$-dimensionale Ausgabevektor entspricht dabei vorteilhaft dem Ergebnis einer Softmax-Funktion, d.h. die Komponenten des Ausgabevektors summieren sich zu 1 und liegen jeweils zwischen 0 und 1, so dass der $K$-dimensionale Ausgabevektor als Wahrscheinlichkeitsverteilung bezüglich einer Zuordnung zu den $N$ Klassen interpretiert werden kann.

Im dargestellten, sehr einfachen Beispiel sind drei Klassen vorgegeben, und zwar "Fahrzeug", "Fußgänger" und "Straße", wobei beispielsweise ein Bildpunkt eines mit der Kamera 210 aufgenommenen digitalen Bildes einer dieser Klassen zugeordnet werden soll.

Bei einer dichten Klassifizierung eines von der Kamera 210 erfassten digitalen Bildes umfasst die Ausgabe des künstlichen neuronalen Netzwerks vorteilhaft eine $m \times n$ Matrix von $N$-dimensionalen Ausgabevektoren, wobei die Ausgabeschicht 430 eine entsprechende Anzahl an künstlichen Neuronen umfasst, und wobei jeder der $N$-dimensionalen Ausgabevektoren als Wahrscheinlichkeitsverteilung bezüglich einer Zuordnung zu den N Klassen interpretiert werden kann.

Im dargestellten Ausführungsbeispiel ist eine kostenbasierte Entscheidungsregel vorgesehen, wobei das Klassifizieren das Ausführen einer Berechnung gemäß einer die ausgewählte Kostenmatrix umfassenden Berechnungsvorschrift umfasst, wobei diese Berechnung durch die dem künstlichen neuronalen Netzwerk nachgeschaltete Verarbeitungsschicht 510 ausgeführt wird.

Die verwendete Kostenmatrix für diesen einfachen Fall mit nur drei Klassen ist beispielhaft in Fig. 4 angegeben, wobei die Kostenmatrix für jede Kombination von zuordenbarer Klasse bzw. inferierter Klasse und Soll-Klasse bzw. tatsächlicher Klasse einen Kostenfaktor umfasst, wobei der jeweilige Kostenfaktor die Kosten angibt, die sich ergeben, wenn statt der Soll-Klasse bzw. der tatsächlichen Klasse die jeweilige zuordenbare Klasse zugeordnet bzw. inferiert wird. Wie oben ausgeführt, wird die verwendete Kostenmatrix in Abhängigkeit einer Umgebungssituation aus einer Mehrzahl unterschiedlicher Kostenmatrizen ausgewählt, wobei die Umgebungssituation durch das Überwachungsmodul in Abhängigkeit ermittelter Umgebungsvariablen bestimmt wird.

Es sei angemerkt, dass auch eine deutlich höhere Anzahl möglicher Klassen vorgegeben werden kann. Der übersichtlicheren Darstellung wegen sind im dargestellten Ausführungsbeispiel jedoch nur drei Klassen vorgesehen. Bei einer höheren Anzahl an zuordenbaren Klassen umfasst die Kostenmatrix dementsprechend mehr Einträge.

Im Folgenden wird die zum Zweck der Klassifizierung vorgenommene Rechnung im Detail dargestellt.

Die Ausgabe des künstlichen neuronalen Netzwerks sei gegeben als Wahrscheinlichkeitsverteilung

$$\vec{p}(k|\vec{x})$$

mit

$k \in K = \{1, ..., N\}$ : Klasse
N : Anzahl der Klassen
$\vec{x}$ : Merkmalsvektor am Eingang des künstlichen neuronalen Netzwerks

Es sei angemerkt, dass die Ausgabe des künstlichen neuronalen Netzwerks auch eine Mehrzahl solcher Wahrscheinlichkeitsverteilungen umfassen kann, beispielsweise bei Durchführen einer dichten Klassifizierung wie oben beschrieben, wobei in diesem Fall die nachfolgenden Schritte für jede der Mehrzahl von Wahrscheinlichkeitsverteilungen durchgeführt werden.

Als Spaltenvektor hat die Wahrscheinlichkeitsverteilung die folgende Form:

$$\vec{p}(\vec{x}) = \left(p(1|\vec{x}), ..., p(N|\vec{x})\right)^T$$

Ferner sei angenommen, dass die Wahrscheinlichkeitsverteilung in Form einer Softmax-Ausgabe vorliegt, d.h. die Komponenten des Ausgabevektors $\vec{p}(\vec{x})$ summieren sich zu 1 und liegen jeweils zwischen 0 und 1, so dass der N-dimensionale Ausgabevektor als Wahrscheinlichkeitsverteilung bezüglich einer Zuordnung zu den N Klassen interpretiert werden kann.

Statt gemäß der Bayes'schen Entscheidungsregel die argmax-Funktion auf diese Wahrscheinlichkeitsverteilung anzuwenden, um als zugeordnete Klasse diejenige mit der größten Wahrscheinlichkeit zu bestimmen, sieht die Erfindung eine sicherheitsgerichtete Entscheidungsregel vor.

Für diese wird eine Kostenmatrix der folgenden Form vorgegeben:

$$C := \left(c\left(\hat{k}, k\right)\right)_{\hat{k}, k=1, ..., N} \in V \subset \mathbb{R}_{\geq 0}^{N \times N}$$

mit

$$V = \left\{C \in \mathbb{R}^{N \times N} \,|\, C_{jj} = 0, C_{ij} > 0, i, j \in K\right\}$$

$$K = \{1, ..., N\}$$

$\hat{k}$ : inferierte Klasse

k : Soll-Klasse

Unter Verwendung der vorgegebenen Kostenmatrix wird folgende kostenbasierte Entscheidungsregel verwendet:

$$d(\vec{x}, C) := \underset{k \in \{1, \dots, N\}}{argmin} C_k \cdot \vec{p}(\vec{x})$$

mit

$C_k := (C_{k1}, \dots, C_{kN})$ : k-ter Zeilenvektor von $C \in V$

Für die in Fig. 4 beispielhaft angegebene Kostenmatrix

$$C = \begin{pmatrix} 0 & 7 & 1 \\ 5 & 0 & 1 \\ 9 & 9 & 0 \end{pmatrix}$$

ergeben sich die folgenden Klassenzuordnungen bei Verwendung der oben angegebenen kostenbasierten Entscheidungsregel für die folgenden beispielhaften, von dem künstlichen neuronalen Netzwerk ermittelten Wahrscheinlichkeitsverteilungen:

Beispiel 1:

$$\vec{p}(\vec{x}) = \begin{pmatrix} 0,7 \\ 0,2 \\ 0,1 \end{pmatrix}$$

$$\Rightarrow d(\vec{x}, C) = argmin \begin{pmatrix} 0 & 7 & 1 \\ 5 & 0 & 1 \\ 9 & 9 & 0 \end{pmatrix} \cdot \begin{pmatrix} 0,7 \\ 0,2 \\ 0,1 \end{pmatrix} = argmin\ (1,5;\ 3,6;\ 8,1)$$

=> Zugeordnete Klasse: Fahrzeug

Beispiel 2:

$$\vec{p}(\vec{x}) = \begin{pmatrix} 0,2 \\ 0,2 \\ 0,6 \end{pmatrix}$$

$$\Rightarrow d(\vec{x}, C) = argmin \begin{pmatrix} 0 & 7 & 1 \\ 5 & 0 & 1 \\ 9 & 9 & 0 \end{pmatrix} \cdot \begin{pmatrix} 0,2 \\ 0,2 \\ 0,6 \end{pmatrix} = argmin\ (2;\ 1,6;\ 3,6)$$

=> Zugeordnete Klasse: Fußgänger

Beispiel 3:

$$\vec{p}(\vec{x}) = \begin{pmatrix} 0,1 \\ 0,1 \\ 0,8 \end{pmatrix}$$

$$\Rightarrow d(\vec{x}, C) = argmin \begin{pmatrix} 0 & 7 & 1 \\ 5 & 0 & 1 \\ 9 & 9 & 0 \end{pmatrix} \cdot \begin{pmatrix} 0,1 \\ 0,1 \\ 0,8 \end{pmatrix} = argmin\ (1,5;\ 1,3;\ 1,8)$$

=> Zugeordnete Klasse: Fußgänger

Beispiel 4:

$$\vec{p}(\vec{x}) = \begin{pmatrix} 0,05 \\ 0,05 \\ 0,9 \end{pmatrix}$$

$$=> d(\vec{x}, C) = argmin \begin{pmatrix} 0 & 7 & 1 \\ 5 & 0 & 1 \\ 9 & 9 & 0 \end{pmatrix} \cdot \begin{pmatrix} 0,05 \\ 0,05 \\ 0,9 \end{pmatrix} = argmin\ (1,25;\ 1,15;\ 0,9)$$

=> Zugeordnete Klasse: Straße

An den angegebenen Beispielen ist anschaulich erkennbar, dass durch die erfindungsgemäß verwendete kostenbasierte Entscheidungsregel beispielsweise die Wahrscheinlichkeit für einen Zuordnungsfehler, bei dem ein Fußgänger fälschlich als Straße erkannt wird, reduziert und damit die Sicherheit des Fußgängers erhöht wird.

Das beschriebene Verfahren ermöglicht somit besonders vorteilhaft ein gezieltes, steuerbares und statistisch plausibles Inferieren von künstlichen neuronalen Netzwerken unter spezieller Rücksichtnahme auf Sicherheitsziele, wobei das beschriebene Verfahren modular ist und sowohl ein einfaches Austauschen des Wahrnehmungsmodells als auch der in der Kostenfunktion etablierten Sicherheitsziele erlaubt.

Eine Veränderung der Klassifizierung mit dem Ziel der gesteigerten funktionalen Sicherheit, ohne einen Eingriff in das Modell an sich oder den Trainingsdatensatz, ist ein besonderer Vorteil des Verfahrens.

Durch die Auswahl der zu verwendenden Kostenmatrix in Abhängigkeit von für Umgebungsvariablen ermittelten Werten können vorteilhaft kontextspezifische Sicherheitsziele definiert und deren Einhaltung sichergestellt werden.

Mit anderen Worten wird vorteilhaft basierend auf dem wahrgenommenen Kontext die relevante Kostenfunktion gewählt und damit implizit die sicherzustellenden Sicherheitsziele bewertet.

Das beschriebene Verfahren ermöglicht ein gezieltes, steuerbares und statistisch plausibles Inferieren von künstlichen neuronalen Netzwerken unter spezieller Rücksichtnahme auf Sicherheitsziele und insbesondere unter Berücksichtigung der aktuellen Fahrsituation und sich daraus ergebenden kontextspezifischen Sicherheitszielen.

Weiterhin ist das beschriebene Verfahren modular und erlaubt sowohl ein einfaches Austauschen des Wahrnehmungsmodells als auch der in der Kostenfunktion etablierten Sicherheitsziele. Besonders vorteilhaft ist das sich aus der Fahrsituation ergebende Auswählen und Implementieren von Sicherheitszielen bereits auf dem Level der Wahrnehmung.

Eine Veränderung der Klassifizierung mit dem Ziel der gesteigerten funktionalen Sicherheit, ohne einen Eingriff in das Modell an sich oder den Trainingsdatensatz, ist ein weiterer besonderer Vorteil des Verfahrens.

**Patentansprüche**

1. Verfahren zum automatischen Ausführen einer Steuerfunktion eines autonom oder teilautonom gesteuerten Fahrzeugs (100), umfassend die Schritte:

   - Ermitteln von Sensordaten mittels wenigstens eines Sensors (210) des Fahrzeugs (100),
   - Verarbeiten der Sensordaten mittels eines künstlichen neuronalen Netzwerkes (500), wobei dem künstlichen neuronalen Netzwerk (500) die Sensordaten oder aus den Sensordaten abgeleitete Daten als Eingangsgrößen zugeführt werden und das künstliche neuronale Netzwerk (500) die Eingangsgrößen in Abhängigkeit einer parametrierbaren Verarbeitungskette (410, 420, 430) auf Ausgangsgrößen abbildet, **dadurch gekennzeichnet, dass**
   - Ermitteln wenigstens eines Wertes wenigstens einer Umgebungsvariablen als Umgebungsgröße, wobei in Abhängigkeit des wenigstens einen ermittelten Wertes der wenigstens einen Umgebungsvariablen eine Umgebungssituation aus einer Mehrzahl vorgegebener Umgebungssituationen bestimmt wird, wobei das Bestimmen der Umgebungssituation insbesondere mittels Vergleichen des wenigstens einen ermittelten Wertes mit hinterlegten Vergleichswerten erfolgt
   - Klassifizieren der ermittelten Sensordaten in Abhängigkeit der von dem künstlichen neuronalen Netzwerk ermittelten Ausgangsgrößen und in Abhängigkeit des wenigstens einen ermittelten Wertes der wenigstens einen Umgebungsvariablen, und
   - Ausführen der Steuerfunktion in Abhängigkeit der Klassifizierung.

2. Verfahren nach Anspruch 1, wobei das Ermitteln des wenigstens einen Wertes der wenigstens einen Umgebungsvariablen mittels wenigstens eines Sensors (220) des Fahrzeugs (100) erfolgt, oder ein Auslesen des Wertes aus einem im Fahrzeug (100) angeordneten Speicher oder ein Empfangen des Wertes über eine Kommunikationsschnittstelle des Fahrzeugs umfasst.

3. Verfahren nach einem der Ansprüche 1 oder 2, ferner umfassend

- Bestimmen, in Abhängigkeit des wenigstens einen ermittelten Wertes der wenigstens einen Umgebungsvariablen, einer Umgebungssituation aus einer Mehrzahl vorgegebener Umgebungssituationen, wobei das Bestimmen der Umgebungssituation insbesondere mittels Vergleichen des wenigstens einen ermittelten Wertes mit hinterlegten Vergleichswerten erfolgt.

4. Verfahren nach Anspruch 3, wobei das Klassifizieren der ermittelten Sensordaten zu einer von einer Mehrzahl vorbestimmter Klassen in Abhängigkeit einer kostenbasierten Entscheidungsregel erfolgt, umfassend das Ausführen wenigstens einer Berechnung gemäß einer eine Kostenmatrix umfassenden Berechnungsvorschrift, wobei die Kostenmatrix für jede Kombination von zuordenbarer Klasse und Soll-Klasse einen Kostenfaktor umfasst, wobei der jeweilige Kostenfaktor die Kosten angibt, die sich ergeben, wenn statt der Soll-Klasse die jeweilige zuordenbare Klasse zugeordnet wird, und wobei
die Kostenmatrix in Abhängigkeit der bestimmten Umgebungssituation aus einer Mehrzahl unterschiedlicher vorgegebener Kostenmatrizen ausgewählt wird.

5. Verfahren nach Anspruch 4, wobei für jede der Mehrzahl vorgegebener Umgebungssituationen genau eine Kostenmatrix vorgegeben wird, und wobei das Auswählen der Kostenmatrix in Abhängigkeit einer eindeutigen Zuordnung von Umgebungssituation zu Kostenmatrix erfolgt, wobei die eindeutige Zuordnung insbesondere in einer Tabelle oder in einer indizierten Liste in einem Speicher des Fahrzeugs hinterlegt ist.

6. Verfahren nach einem der Ansprüche 4 oder 5, wobei jede Kostenmatrix folgende Form hat

$$C := \left( c\left( \hat{k}, k \right) \right)_{\hat{k}, k = 1, \dots, N} \in V \subset \mathbb{R}_{\geq 0}^{N \times N}$$

mit

$$V = \left\{ C \in \mathbb{R}^{N \times N} | C_{jj} = 0, C_{ij} > 0, i, j \in K \right\}$$

$$K = \{1, \dots, N\}$$

$\hat{k}$ : inferierte Klasse
$k$ : Soll-Klasse

7. Verfahren nach einem der Ansprüche 4 bis 6, wobei das künstliche neuronale Netzwerk unter Verwendung vorgegebener Trainingsdaten trainiert wird, wobei durch das Training die parametrierbare Verarbeitungskette parametriert wird, und wobei die sicherheitsgerichtete Entscheidungsregel und die vorgegebenen Kostenmatrizen durch das Training des künstlichen neuronalen Netzwerks nicht geändert werden.

8. Verfahren nach Anspruch 7, wobei während des Trainings gemäß der Bayes'schen Entscheidungsregel jeweils diejenige Klasse als Zuordnungsergebnis ausgewählt wird, für welche das neuronale Netzwerk den höchsten Wahrscheinlichkeitswert liefert.

9. Verfahren nach einem der Ansprüche 4 bis 8, wobei die sicherheitsgerichtete Entscheidungsregel dem künstlichen neuronalen Netzwerk als weitere Verarbeitungsschicht nachgeschaltet ist.

10. Verfahren nach einem der vorstehenden Ansprüche, wobei das künstliche neuronale Netzwerk als tiefes künstliches neuronales Netzwerk ausgebildet ist, bei dem die parametrierbare Verarbeitungskette eine Mehrzahl von Verarbeitungsschichten aufweist.

**11.** Verfahren nach einem der vorstehenden Ansprüche, wobei das Klassifizieren ein Zuordnen der ermittelten Sensordaten zu einer von N vorgegebenen Klassen umfasst, wobei N eine natürliche Zahl mit N>1, insbesondere mit N>2, ist.

**12.** Verfahren nach Anspruch 11, wobei der Eingabeschicht des künstlichen neuronalen Netzwerks ein von einer Kamera erfasstes digitales Bild zugeführt wird, und wobei die Ausgabeschicht des künstlichen neuronalen Netzwerks eine Matrix von N-dimensionalen Ausgabevektoren liefert, wobei jeder der N-dimensionalen Ausgabevektoren als Wahrscheinlichkeitsverteilung bezüglich einer Zuordnung zu den N Klassen interpretiert werden kann.

**13.** Steuersystem (200, 230, 240) zum automatischen Ausführen einer Steuerfunktion eines autonom oder teilautonom gesteuerten Fahrzeugs (100), umfassend

- ein Überwachungsmodul (240) zum Ermitteln wenigstens eines Wertes wenigstens einer Umgebungsvariablen,
- eine mit dem Überwachungsmodul (240) verbundene Auswerteeinheit (230) mit wenigstens einem Eingang zum Anschließen wenigstens eines Sensors (210) des Fahrzeugs, wobei die Auswerteinheit (230) ein Klassifizierungsmodul umfasst, welches dazu ausgebildet ist,
- von dem wenigstens einen Sensor (210) ermittelte Sensordaten mittels eines künstlichen neuronalen Netzwerkes (500) zu verarbeiten, wobei dem künstlichen neuronalen Netzwerk (500) die Sensordaten oder aus den Sensordaten abgeleitete Daten als Eingangsgrößen zugeführt werden und das künstliche neuronale Netzwerk (500) die Eingangsgrößen in Abhängigkeit einer parametrierbaren Verarbeitungskette (410, 420, 430) auf Ausgangsgrößen abbildet, **dadurch gekennzeichnet, dass**
- die ermittelten Sensordaten in Abhängigkeit der von dem künstlichen neuronalen Netzwerk ermittelten Ausgangsgrößen und in Abhängigkeit wenigstens eines mittels des Überwachungsmoduls (240) ermittelten Wertes wenigstens einer Umgebungsvariablen zu klassifizieren, und
- eine mit der Auswerteeinheit (230) verbundene Steuereinheit (200) mit wenigstens einem Ausgang zum Anschließen wenigstens eines Aktors des Fahrzeugs, wobei die Steuereinheit dazu ausgebildet ist, die Steuerfunktion in Abhängigkeit eines von der Auswerteeinheit (230) bereitgestellten Klassifizierungsergebnisses durch Ansteuern des wenigstens einen Aktors auszuführen.

**14.** Steuersystem nach Anspruch 13, wobei das Überwachungsmodul (240) wenigstens einen Eingang zum Einlesen von Sensordaten, einen Speicher und/oder eine Kommunikationsschnittstelle umfasst.

**15.** Fahrzeug (100), ausgebildet zum autonom oder teilautonom gesteuerten Fahren, umfassend ein Steuersystem nach einem der Ansprüche 13 oder 14.

**Claims**

**1.** Method for automatically performing a control function of an autonomously or semi-autonomously controlled vehicle (100), comprising the steps of:

- ascertaining sensor data by means of at least one sensor (210) of the vehicle (100),
- processing the sensor data by means of an artificial neural network (500), wherein the artificial neural network (500) is supplied with the sensor data or with data derived from the sensor data as input variables and the artificial neural network (500) maps the input variables to output variables on the basis of a parameterizable processing chain (410, 420, 430), **characterized by**
- ascertaining at least one value of at least one environment variable as an environment quantity, wherein the at least one ascertained value of the at least one environment variable is taken as a basis for determining an environment situation from a plurality of predefined environment situations, the environment situation being determined in particular by comparing the at least one ascertained value with stored comparison values,
- classifying the ascertained sensor data on the basis of the output variables ascertained by the artificial neural network and on the basis of the at least one ascertained value of the at least one environment variable, and
- executing the control function on the basis of the classification.

**2.** Method according to Claim 1, wherein the at least one value of the at least one environment variable is ascertained by means of at least one sensor (220) of the vehicle (100), or said ascertainment comprises reading of the value from a memory arranged in the vehicle (100) or receiving of the value via a communication interface of the vehicle.

3. Method according to either of Claims 1 and 2, further comprising

   - determining, on the basis of the at least one ascertained value of the at least one environment variable, an environment situation from a plurality of predefined environment situations, the environment situation being determined in particular by comparing the at least one ascertained value with stored comparison values.

4. Method according to Claim 3, wherein the ascertained sensor data are classified into one of a plurality of predetermined classes on the basis of a cost-based decision rule, comprising performing at least one calculation in accordance with a calculation rule comprising a cost matrix, wherein the cost matrix comprises a cost factor for every combination of associable class and target class, the respective cost factor indicating the costs incurred if the respective associable class is assigned instead of the target class, and wherein
   the cost matrix is selected from a plurality of different predefined cost matrices on the basis of the determined environment situation.

5. Method according to Claim 4, wherein precisely one cost matrix is predefined for each of the plurality of predefined environment situations, and wherein the cost matrix is selected on the basis of a unique association of environment situation and cost matrix, the unique association being stored in particular in a table or in an indexed list in a memory of the vehicle.

6. Method according to either of Claims 4 and 5, wherein each cost matrix has the following form:

$$C := \left( c\!\left( \hat{k}, k \right) \right)_{\hat{k}, k = 1, \dots, N} \in V \subset \mathbb{R}_{\geq 0}^{N \times N}$$

   where

$$V = \left\{ C \in \mathbb{R}^{N \times N} \mid C_{jj} = 0, C_{ij} > 0, i, j \in K \right\}$$

$$K = \{1, \dots, N\}$$

   $\hat{k}$ = inferred class
   k: target class

7. Method according to one of Claims 4 to 6, wherein the artificial neural network is trained using predefined training data, wherein the training parameterizes the parameterizable processing chain, and wherein the safety-oriented decision rule and the predefined cost matrices are not changed by the training of the artificial neural network.

8. Method according to Claim 7, wherein the particular class for which the neural network delivers the highest probability value is selected as the association result during the training in accordance with the Bayesian decision rule.

9. Method according to one of Claims 4 to 8, wherein the safety-oriented decision rule is connected downstream of the artificial neural network as a further processing layer.

10. Method according to one of the preceding claims, wherein the artificial neural network is in the form of a deep artificial neural network in which the parameterizable processing chain comprises a plurality of processing layers.

11. Method according to one of the preceding claims, wherein the classifying comprises associating the ascertained sensor data with one of N predefined classes, N being a natural number where N>1, in particular where N>2.

12. Method according to Claim 11, wherein the input layer of the artificial neural network is supplied with a digital image captured by a camera, and wherein the output layer of the artificial neural network delivers a matrix of N-dimensional output vectors, each of the N-dimensional output vectors being able to be interpreted as a probability distribution for an association with the N classes.

13. Control system (200, 230, 240) for automatically performing a control function of an autonomously or semi-autonomously controlled vehicle (100), comprising

- a monitoring module (240) for ascertaining at least one value of at least one environment variable,
- an evaluation unit (230), connected to the monitoring module (240), having at least one input for connecting at least one sensor (210) of the vehicle, the evaluation unit (230) comprising a classification module that is designed
- to process sensor data ascertained by the at least one sensor (210) by means of an artificial neural network (500), wherein the artificial neural network (500) is supplied with the sensor data or with data derived from the sensor data as input variables and the artificial neural network (500) maps the input variables to output variables on the basis of a parameterizable processing chain (410, 420, 430), **characterized by**
- classifying the ascertained sensor data on the basis of the output variables ascertained by the artificial neural network and on the basis of at least one value ascertained by means of the monitoring module (240) of at least one environment variable, and
- a control unit (200), connected to the evaluation unit (230), having at least one output for connecting at least one actuator of the vehicle, wherein the control unit is designed to perform the control function on the basis of a classification result provided by the evaluation unit (230) by actuating the at least one actuator.

14. Control system according to Claim 13, wherein the monitoring module (240) comprises at least one input for reading in sensor data, a memory and/or a communication interface.

15. Vehicle (100), designed for autonomously or semi-autonomously controlled driving, comprising a control system according to either of Claims 13 and 14.

**Revendications**

1. Procédé permettant d'effectuer automatiquement une fonction de commande d'un véhicule (100) à commande autonome ou semi-autonome, comprenant les étapes consistant à :

- établir des données de capteur au moyen d'au moins un capteur (210) du véhicule (100),
- traiter les données de capteur au moyen d'un réseau de neurones artificiels (500), les données de capteur ou des données dérivées des données de capteur étant introduites comme grandeurs d'entrée dans le réseau de neurones artificiels (500), et le réseau de neurones artificiels (500) mappant les grandeurs d'entrée sur des grandeurs de sortie en fonction d'une chaîne de traitement paramétrable (410, 420, 430), **caractérisé par** les étapes consistant à
- établir au moins une valeur d'au moins une variable d'environnement comme grandeur d'environnement, dans lequel, en fonction de ladite au moins une valeur établie de ladite au moins une variable d'environnement, une situation d'environnement est déterminée parmi une pluralité de situations d'environnement prédéfinies, la détermination de la situation d'environnement étant effectuée en particulier au moyen d'une comparaison de ladite au moins une valeur établie avec des valeurs comparatives mémorisées,
- classifier les données de capteur établies en fonction des grandeurs de sortie établies par le réseau de neurones artificiels et en fonction de ladite au moins une valeur établie de ladite au moins une variable d'environnement, et
- effectuer la fonction de commande en fonction de la classification.

2. Procédé selon la revendication 1, dans lequel l'établissement de ladite au moins une valeur de ladite au moins une variable d'environnement est effectué au moyen d'au moins un capteur (220) du véhicule (100), ou comprend une lecture de la valeur dans une mémoire disposée sur le véhicule (100) ou une réception de la valeur par une interface de communication du véhicule.

3. Procédé selon l'une quelconque des revendications 1 ou 2, comprenant en outre

- la détermination, en fonction de ladite au moins une valeur établie, de ladite au moins une variable d'environnement, d'une situation d'environnement parmi une pluralité de situations d'environnement prédéfinies, la détermination de la situation d'environnement étant effectuée en particulier au moyen d'une comparaison de ladite au moins une valeur établie avec des valeurs comparatives mémorisées.

4. Procédé selon la revendication 3, dans lequel la classification des données de capteur établies en l'une d'une pluralité de classes prédéterminées est effectuée en fonction d'une règle de décision basée sur les coûts, comprenant l'exécution d'au moins un calcul selon une règle de calcul comprenant une matrice de coûts, la matrice de coûts comprenant pour un facteur de coût chaque combinaison d'une classe pouvant être attribuée et d'une classe théorique, le facteur de coût respectif indiquant les coûts qui résultent si la classe pouvant être attribuée respective est attribuée au lieu de la classe théorique,

et la matrice de coûts étant sélectionnée en fonction de la situation d'environnement déterminée parmi une pluralité de différentes matrices de coûts prédéfinies.

5. Procédé selon la revendication 4, dans lequel pour chacune de la pluralité de situations d'environnement prédéfinies, exactement une matrice de coûts est prédéfinie, et dans lequel la sélection de la matrice de coûts est effectuée en fonction d'une attribution univoque entre la situation d'environnement et la matrice de coûts, l'attribution univoque étant en particulier mémorisée dans un tableau ou une liste indexée dans une mémoire du véhicule.

6. Procédé selon l'une quelconque des revendications 4 ou 5, dans lequel chaque matrice de coûts présente la forme suivante

$$C := \left( c\left( \hat{k}, k \right) \right)_{\hat{k}, k = 1, \ldots, N} \in V \subset \mathbb{R}_{\geq 0}^{N x N}$$

où

$$V = \left\{ C \in \mathbb{R}^{N x N} | C_{jj} = 0, C_{ij} > 0, i, j \in K \right\}$$

$$K = \{1, \ldots, N\}$$

$\hat{k}$ : classe inférée

k : classe théorique

7. Procédé selon l'une quelconque des revendications 4 à 6, dans lequel le réseau de neurones artificiels est entraîné en utilisant des données d'entraînement prédéfinies, l'entraînement permettant de paramétrer la chaîne de traitement paramétrable, et dans lequel la règle de décision orientée sécurité et les matrices de coûts prédéfinies ne sont pas modifiées par l'entraînement du réseau de neurones artificiels.

8. Procédé selon la revendication 7, dans lequel pendant l'entraînement selon la règle de décision bayésienne, la classe pour laquelle le réseau de neurones fournit la valeur de probabilité la plus élevée est respectivement sélectionnée comme résultat de l'attribution.

9. Procédé selon l'une quelconque des revendications 4 à 8, dans lequel la règle de décision orientée sécurité est placée en aval du réseau de neurones artificiels sous la forme d'une couche de traitement supplémentaire.

10. Procédé selon l'une quelconque des revendications précédentes, dans lequel le réseau de neurones artificiels est réalisé sous la forme d'un réseau de neurones artificiels profond dans lequel la chaîne de traitement paramétrable présente une pluralité de couches de traitement.

11. Procédé selon l'une quelconque des revendications précédentes, dans lequel la classification comprend une attribution des données de capteur établies à l'une de N classes prédéfinies, N étant un nombre naturel où N > 1, en particulier N > 2.

12. Procédé selon la revendication 11, dans lequel la couche d'entrée du réseau de neurones artificiels reçoit une image numérique enregistrée par une caméra, et dans lequel la couche de sortie du réseau de neurones artificiels fournit une matrice de vecteurs de sortie à N dimensions, chacun des vecteurs de sortie à N dimensions pouvant être interprété comme une distribution de probabilité concernant une attribution aux N classes.

13. Système de commande (200, 230, 240) permettant d'effectuer automatiquement une fonction de commande d'un véhicule (100) à commande autonome ou semi-autonome, comprenant

- un module de surveillance (240) servant à établir au moins une valeur d'au moins une variable d'environnement,
- une unité d'évaluation (230) reliée au module de surveillance (240) pourvue d'au moins une entrée servant à connecter au moins un capteur (210) du véhicule, l'unité d'évaluation (230) comprenant un module de classification qui est réalisé pour
  - traiter des données établies par ledit au moins un capteur (210) au moyen d'un réseau de neurones artificiels (500), les données de capteur ou des données dérivées des données de capteur étant introduites comme grandeurs d'entrée dans le réseau de neurones artificiels (500), et le réseau de neurones artificiels (500) mappant les grandeurs d'entrée sur des grandeurs de sortie en fonction d'une chaîne de traitement paramétrable (410, 420, 430),

  **caractérisé par**
  - la classification des données de capteur établies en fonction des grandeurs de sortie établies par le réseau de neurones artificiels et en fonction d'au moins une valeur d'au moins une variable d'environnement, établie au moyen du module de surveillance (240), et
  - une unité de commande (200) reliée à l'unité d'évaluation (230) pourvue d'au moins une sortie servant à connecter au moins un actionneur du véhicule, l'unité de commande étant réalisée pour effectuer la fonction de commande en fonction d'un résultat de classification fourni par l'unité d'évaluation (230) par le pilotage du au moins un actionneur.

14. Système de commande selon la revendication 13, dans lequel le module de surveillance (240) comprend au moins une entrée pour lire des données de capteur, une mémoire et/ou une interface de communication.

15. Véhicule (100), réalisé pour la conduite à commande autonome ou semi-autonome, comprenant un système de commande selon l'une quelconque des revendications 13 ou 14.

Fig. 1

Fig. 2

500

410        420        430

Fig. 3

$$C \cdot \vec{p}$$

410        420        430     510

Fig. 4

520

$$C = \begin{bmatrix} 0 & 7 & 1 \\ 5 & 0 & 1 \\ 9 & 9 & 0 \end{bmatrix}$$

Fahrzeug
Fußgänger
Straße

Inferierte Klasse

Fahrzeug  Fußgänger  Straße

Tatsächliche Klasse

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016009655 A1
- DE 102018129048 A1
- DE 102018121595 A1